# EUROPÄISCHE PATENTANMELDUNG

(11) **EP 4 471 307 A1**
(43) Veröffentlichungstag der Anmeldung: **04.12.2024**
(21) Anmeldenummer: 24172939.1
(22) Anmeldetag: 29.04.2024
(51) Int. Cl.: F16K 11/07, F16K 31/122

(54) **VENTIL ZUR STEUERUNG VON FLUIDSTRÖMEN**

(30) Priorität: 31.05.2023 DE 102023114217
(71) Anmelder: Festo SE & Co. KG, 73734 Esslingen (DE)
(72) Erfinder: Usinger, Eduard, 73773 Aichwald (DE); Wenske, Eduard, 70806 Kornwestheim (DE)
(74) Vertreter: Patentanwälte Magenbauer & Kollegen Partnerschaft mbB

(57) **Zusammenfassung**

Die Erfindung betrifft ein Ventil (1; 101) zur Steuerung von Fluidströmen, mit einem Ventilgehäuse (2; 102), in dem eine Steuerbohrung (22; 122) ausgebildet ist, in der zwischen einer ersten Öffnungsstellung und einer ersten Schließstellung bewegliches erstes Ventilglied (6; 106) und ein zwischen einer zweiten Öffnungsstellung und einer zweiten Schließstellung bewegliches zweites Ventilglied (7; 107) aufgenommen sind, mit einer ersten Antriebseinrichtung (26; 126) für das erste Ventilglied (6; 106) und mit einer zweiten Antriebseinrichtung (27; 127) für das zweite Ventilglied (7; 107), sowie mit Druckfeder (5), die als Wendelfeder ausgebildet ist. Erfindungsgemäß weist die Druckfeder (5) einen zentralen Federabschnitt (63) auf, der zwischen dem ersten Ventilglied (6; 106) und dem zweiten Ventilglied (7; 107) angeordnet ist und der eine zentrale Windungsteilung (83) aufweist, die zumindest nahezu identisch mit einem Drahtdurchmesser (74) der Druckfeder (5) ist.

## Beschreibung

Die Erfindung betrifft ein Ventil zur Steuerung von Fluidströmen, mit einem Ventilgehäuse, in dem eine Steuerbohrung ausgebildet ist, die längs einer Bohrungsachse erstreckt ist und in der ein längs der Bohrungsachse zwischen einer ersten Öffnungsstellung und einer ersten Schließstellung für einen ersten Fluidkanal bewegliches erstes Ventilglied und ein längs der Bohrungsachse zwischen einer zweiten Öffnungsstellung und einer zweiten Schließstellung für einen zweiten Fluidkanal bewegliches zweites Ventilglied aufgenommen sind, mit einer ersten Antriebseinrichtung, die dem ersten Ventilglied zur Bereitstellung einer ersten Stellkraft längs einer ersten Kraftrichtung zugeordnet ist und mit einer zweiten Antriebseinrichtung, die dem zweiten Ventilglied zur Bereitstellung einer zweiten Stellkraft längs einer zweiten Kraftrichtung zugeordnet ist, sowie mit einer längs der Bohrungsachse vom ersten Ventilglied zum zweiten Ventilglied erstreckten Druckfeder, die als Wendelfeder ausgebildet ist.

Mit einem derartigen Ventil können Fluidströmungen in den beiden im Ventilgehäuse ausgebildeten ersten und zweiten Fluidkanäle mithilfe der zugeordneten ersten und zweiten Antriebseinrichtungen individuell und unabhängig voneinander beeinflusst werden. Da das erste Ventilglied und das zweite Ventilglied in einer gemeinsamen Steuerbohrung aufgenommen sind und eine gemeinsame Nutzung der als Wendelfeder ausgebildeten Druckfeder vorgesehen ist, kann eine kostengünstige und kompakte Gestaltung des Ventils erzielt werden.

Die Aufgabe der Erfindung besteht darin, ein Ventil zur Steuerung von Fluidströmen bereitzustellen, das eine verbesserte Betriebssicherheit aufweist.

Diese Aufgabe wird für ein Ventil der eingangs genannten Art dadurch gelöst, dass die Druckfeder einen zentralen Federabschnitt aufweist, der zwischen dem ersten Ventilglied und dem zweiten Ventilglied angeordnet ist und der eine zentrale Windungsteilung aufweist, die zumindest nahezu identisch, insbesondere identisch, mit einem Drahtdurchmesser der Druckfeder, insbesondere mit einem Drahtdurchmesser der Druckfeder im zentralen Federabschnitt, ist.

Die zwischen dem ersten Ventilglied und dem zweiten Ventilglied angeordnete und als Wendelfeder ausgebildete Druckfeder dient zur Bereitstellung von Druckkräften auf das erste Ventilglied und das zweite Ventilglied. Bei einer Relativbewegung des ersten Ventilglieds gegenüber dem Ventilgehäuse und dem zweiten Ventilglied und bei einer Relativbewegung des zweiten Ventilglieds gegenüber dem Ventilgehäuse und dem ersten Ventilglied findet in Abhängigkeit von der jeweiligen Bewegungsrichtung eine Kompression oder eine Expansion der Wendelfeder statt, die sich in einer Zunahme oder einer Abnahme der in der Wendelfeder gespeicherten Deformationsenergie äußert.

Die Wendelfeder wird von einer Vielzahl von, vorzugsweise kreisrunden, Windungen eines Federdrahtes gebildet, wobei eine längste Erstreckung der Wendelfeder bei der Verwendung der Wendelfeder in dem Ventil längs der Bohrungsachse der Steuerbohrung ausgerichtet ist. Ein Abstand zwischen benachbarten Windungen der Wendelfeder wird auch als Teilung bezeichnet, wobei die Teilung zusammen mit einem Durchmesser der, vorzugsweise kreisrunden, Windung und einem Durchmesser des, vorzugsweise mit kreisrundem Querschnitt ausgebildeten, Federdrahtes die Deformationseigenschaften der Wendelfeder bestimmen.

Die zur Verwendung im Ventil vorgesehene Druckfeder weist einen zentralen Federabschnitt auf, der zwischen einem ersten Federabschnitt und einem zweiten Federabschnitt erstreckt ist. Dabei dient der zentrale Federabschnitt zur Verbindung des ersten Federabschnitts mit dem zweiten Federabschnitt. Der erste Federabschnitt und der zweite Federabschnitt sind derart beschaffen, dass eine Relativbewegung des ersten Ventilglieds und/oder des zweiten Ventilglieds längs der Bohrungsachse zu einer Kompression oder zu einer Expansion, also zu einer Verkürzung oder zu einer Verlängerung des ersten Federabschnitts und des zweiten Federabschnitts führt. Die Aufgabe des zentralen Federabschnitts bei der Verwendung im Ventil besteht darin, eine stabile Kraftübertragung zwischen dem ersten Federabschnitt und dem zweiten Federabschnitt zu gewährleisten.

Bei einem aus dem Stand der Technik bekannten Ventil ist vorgesehen, dass der erste Federabschnitt und der zweite Federabschnitt jeweils durch separate Wendelfedern gebildet werden und eine Verbindung der beiden Wendelfeder durch ein starres Verbindungsglied wie beispielsweise einen Rundstab oder einen Rohrabschnitt verwirklicht wird. Hierbei ist nachteilig, dass mit dem ersten Federabschnitt, dem Verbindungsglied und dem zweiten Federabschnitt wenigstens drei Komponenten benötigt werden, wodurch höhere Herstellungskosten und ein vergrößerter Bauraumbedarf gegenüber der erfindungsgemäßen, einstückig ausgebildeten Druckfeder mit ihren unterschiedlich konfigurierten Federabschnitten hervorgerufen werden.

Um eine vorteilhafte Kraftübertragung zwischen dem ersten Federabschnitt und den zweiten Federabschnitt zu gewährleisten, weist der zentrale Federabschnitt eine zentrale Windungsteilung auf, bei der ein Abstand benachbarter Windungen zumindest nahezu dem Drahtdurchmesser entspricht, der für den zentralen Federabschnitt vorgesehen ist. Bevorzugt ist vorgesehen, dass die Windungsteilung für den zentralen Federabschnitt dem Drahtdurchmesser entspricht, der für den zentralen Federabschnitt vorgesehen ist, sodass benachbarte Windungen im zentralen Federabschnitt in unmittelbarem Kontakt zueinander stehen. Bei einer derartigen Anordnung der Windungen wird auch davon gesprochen, dass die Windungen auf Block gewickelt sind. Hierdurch wird einerseits eine unmittelbare Übertragung von Druckkräften zwischen dem ersten Federabschnitt und dem zweiten Federabschnitt gewährleistet, da der zentrale Federabschnitt aufgrund der kontaktbehafteten Anlage der zugehörigen Windungen keine weitere Kompression vollziehen kann. Andererseits wird durch eine solche Anordnung der Windungen ein Ausknicken des zentralen Federabschnitts vermieden, wie es bei einer starken Erhöhung der Druckkräfte zwischen dem ersten Federabschnitt und der zweiten Federabschnitt im zentralen Federabschnitt auftreten könnte, wenn die Windungen im zentralen Federabschnitt nicht unmittelbar benachbart zueinander angeordnet, vorzugsweise in direktem Kontakt zueinander angeordnet, sind. Ein solches Ausknicken der Druckfeder würde dazu führen, dass sich die Druckfeder nicht mehr längs der Bohrungsachse erstreckt, sondern vielmehr im zentralen Federabschnitt U-förmig ausgewölbt wäre und damit die gesamte Funktion für das Ventil in Frage gestellt wäre.

Vorteilhafte Weiterbildungen der Erfindung sind Gegenstand der Unteransprüche.

Zweckmäßig ist es, wenn die Druckfeder einen dem ersten Ventilglied zugeordneten ersten Federabschnitt aufweist, der zumindest bereichsweise mit einer ersten Windungsteilung ausgebildet ist, und dass die Druckfeder einen dem zweiten Ventilglied zugeordneten zweiten Federabschnitt aufweist, der zumindest bereichsweise mit einer zweiten Windungsteilung ausgebildet ist, wobei die erste Windungsteilung und die zweite Windungsteilung größer als die zentrale Windungsteilung sind. Die Aufgabe des ersten Federabschnitts und des zweiten Federabschnitt besteht darin, Rückstellkräfte für das erste Ventilglied und das zweite Ventilglied bereitzustellen, die von den jeweils zugeordneten ersten und zweiten Antriebseinrichtungen jeweils mit ersten und zweiten Stellkräften beaufschlagt werden können. Hierbei ist davon auszugehen, dass sowohl die erste Antriebseinrichtung als auch die zweite Antriebseinrichtung jeweils einfachwirkend ausgebildet sind. Dies bedeutet, dass jede der beiden Antriebseinrichtungen ausschließlich zur Bereitstellung einer Stellkraft längs genau einer Kraftrichtung ausgebildet ist und eine Rückstellung des jeweiligen Ventilglieds durch den jeweils zugeordneten Federabschnitt erfolgt. Hierzu weist der erste Federabschnitt eine erste Windungsteilung auf, die größer als die zentrale Windungsteilung ist. Dies gilt zumindest für den Fall, dass das erste Ventilglied nicht durch die von der ersten Antriebseinrichtung bereitgestellten ersten Stellkraft aus einer Neutralstellung in eine Funktionsstellung überführt wurde. In Abhängigkeit von der Ausgestaltung der Steuerbohrung und des ersten Ventilglieds kann vorgesehen sein, dass die Neutralstellung für das erste Ventilglied eine Schließstellung für den ersten Fluidkanal bedeutet und die Funktionsstellung für das erste Ventilglied eine Öffnungsstellung für den ersten Fluidkanal bedeutet. Alternativ kann vorgesehen sein, dass die Neutralstellung für das erste Ventilglied eine Öffnungsstellung für den ersten Fluidkanal bedeutet und die Funktionsstellung für das erste Ventilglied eine Schließstellung für den ersten Fluidkanal bedeutet. In gleicher Weise kann die Ausgestaltung für die Steuerbohrung und das zweite Ventilglied vorgesehen werden. Besonders bevorzugt ist vorgesehen, dass die erste Windungsteilung und die zweite Windungsteilung in der jeweiligen Neutralstellung des ersten Ventilglieds und des zweiten Ventilglieds größer als die erste Windungsteilung und die zweite Windungsteilung in der jeweiligen Funktionsstellung des ersten Ventilglieds und des zweiten Ventilglieds ist, wobei sowohl die erste Windungsteilung als auch die zweite Windungsteilung stets größer als die zentrale Windungsteilung sind, um eine Bewegungsblockierung für das erste Ventilglied und das zweite Ventilglied zu vermeiden.

Bevorzugt ist vorgesehen, dass das erste Ventilglied ausgehend von einer dem zweiten Ventilglied zugewandten ersten Stirnfläche mit einem längs der Bohrungsachse erstreckten ersten Sackloch versehen ist, das zur Aufnahme des ersten Federabschnitts ausgebildet ist und dass das zweite Ventilglied ausgehend von einer dem ersten Ventilglied zugewandten zweiten Stirnfläche mit einem längs der Bohrungsachse erstreckten zweiten Sackloch versehen ist, das zur Aufnahme des zweiten Federabschnitts ausgebildet ist. Durch eine derartige Gestaltung des ersten Ventilglieds und des zweiten Ventilglieds wird bei Einhaltung einer kompakten Bauweise für das Ventil eine große Erstreckung der Druckfeder längs der Bonusachse ermöglicht, womit eine vorteilhafte Anpassung der Druckfeder an die Bedürfnisse des ersten Ventilglieds mit der zugeordneten ersten Antriebseinrichtung und des zweiten Ventilglieds mit der zugeordneten zweiten Antriebseinrichtung ermöglicht wird. Beispielhaft ist vorgesehen, dass die Druckfeder zu mehr als 50 Prozent, bevorzugt zu mehr als 75 Prozent, insbesondere zu mehr als 85, ihrer Erstreckung längs der Bohrungsachse in dem ersten Sackloch und dem zweiten Sackloch aufgenommen ist, sofern sich das erste Ventilglied und das zweite Ventilglied in der jeweiligen Neutralstellung befinden. Erfolgt eine Überführung beider Ventilglied der in die jeweilige Funktionsstellung, nimmt der Anteil der Länge, mit der die Druckfeder in den jeweiligen Sacklöchern aufgenommen ist, noch weiter zu.

Bei einer Ausgestaltung der Erfindung ist vorgesehen, dass der zentrale Federabschnitt bis in das erste Sackloch und bis in das zweite Sackloch erstreckt ist. Hierdurch wird sichergestellt, dass in einem Bereich zwischen dem ersten Ventilglied und dem zweiten Ventilglied, in dem keine Führung der Druckfeder durch das erste Ventilglied und das zweite Ventilglied gewährleistet ist, ausschließlich der zentrale Federabschnitt mit seiner hohen Widerstandsfähigkeit gegenüber einer unerwünschten Ausknickung angeordnet ist.

Vorteilhaft ist es, wenn die zweite Kraftrichtung der ersten Kraftrichtung entgegengesetzt ist und in Richtung des ersten Ventilglieds weist. Dementsprechend weist ein Abstand zwischen dem ersten Ventilglied und dem zweiten Ventilglied in der jeweiligen Neutralstellung einen maximalen Betrag auf. Der Abstand reduziert sich bei der Überführung eines der beiden Ventilglieder in die jeweilige Funktionsstellung und weist nach der Überführung beider Ventilglieder in die jeweilige Funktionsstellung einen minimalen Betrag ein. Somit entwickelt die Druckfeder für den Fall, dass sowohl das erste Ventilglied als auch das zweite Ventilglied in der jeweiligen Funktionsstellung positioniert sind, ihre maximale Rückstellkraft.

Bei einer vorteilhaften Weiterbildung der Erfindung ist vorgesehen, dass eine Erstreckung der Druckfeder längs der Bohrungsachse wenigstens ein 10-faches, vorzugsweise wenigstens ein 15-faches eines Außendurchmessers der Druckfeder beträgt.

Zweckmäßig ist es, wenn die Druckfeder in einem eingebauten Zustand eine innere Vorspannung aufweist, die von einem Abstand zwischen dem ersten Ventilglied und dem zweiten Ventilglied abhängig ist und dass der zentrale Federabschnitt der Druckfeder in einem ausgebauten Zustand zumindest bereichsweise auf Block gewickelt ist. Durch die innere Vorspannung im eingebauten Zustand der Druckfeder wird sichergestellt, dass das erste Ventilglied und das zweite Ventilglied zuverlässig in der jeweiligen Neutralstellung gehalten werden, sofern keine Stellkraft auf das jeweilige Ventilglied einwirkt, die größer als die Vorspannung der Druckfeder ist und damit eine Relativbewegung des ersten Ventilglieds oder des zweiten Ventilglieds gegenüber dem Ventilgehäuse ermöglichen. Durch die Gestaltung des zentralen Federabschnitts als Anordnung mehrerer auf Block gewickelter Windungen, die auch im ausgebauten Zustand der Druckfeder vorliegt, wird eine vorteilhafte Stabilität für den zentralen Federabschnitt in jeder Betätigungssituation für die Druckfeder gewährleistet.

Bevorzugt ist vorgesehen, dass ein dem zweiten Ventilglied abgewandter Endbereich des ersten Federabschnitts eine mit zunehmendem Abstand vom zweiten Ventilglied abnehmende Windungsteilung aufweist. In gleicher Weise ist für einen dem ersten Ventilglied abgewandten Endbereich des zweiten Federabschnitt eine mit zunehmendem Abstand vom ersten Ventilglied abnehmende Windungsteilung vorgesehen. Hierdurch wird eine vorteilhafte Krafteinleitung vom ersten bzw. zweiten Ventilglied auf die jeweiligen Endbereiche des ersten Federabschnitt bzw. des zweiten Federabschnitt gewährleistet.

In weiterer Ausgestaltung der Erfindung ist vorgesehen, dass der erste Fluidkanal zwischen einem ersten Eingangsanschluss am Ventilgehäuse und einem ersten Ausgangsanschluss am Ventilgehäuse erstreckt ist und bereichsweise von einem ersten Bohrungsabschnitt der Steuerbohrung gebildet wird, der als Ventilsitz oder als Schieberbohrung ausgebildet ist, wobei das erste Ventilglied als Sitzventilglied oder als Schieberventilglied für eine wahlweise Blockierung oder Freigabe eines Strömungsquerschnitts im ersten Bohrungsabschnitt ausgebildet ist. Dementsprechend ist das von dem ersten Bohrungsabschnitt der Steuerbohrung und dem ersten Ventilglied bestimmte erste Steuerventil entweder als Sitzventil oder als Schieberventil ausgebildet. In gleicher Weise kann das von einem zweiten Bohrungsabschnitt der Steuerbohrung und dem zweiten Ventilglied bestimmte zweite Steuerventil entweder als Sitzventilglied oder als Schieberbohrung ausgebildet sein. Bevorzugt sind das erste Steuerventil und das zweite Steuerventil jeweils identisch ausgebildet und spiegelsymmetrisch zu einer Mittelebene des Ventils angeordnet.

Vorteilhaft ist es, wenn die erste Antriebseinrichtung als pneumatischer Antrieb ausgebildet ist, bei der das erste Ventilglied mit der Steuerbohrung einen größenvariablen ersten Antriebsraum begrenzt oder dass die erste Antriebseinrichtung als Magnetantrieb ausgebildet ist, bei der das erste Ventilglied als Anker beweglich in einer Magnetspule aufgenommen ist. Bei einer Ausgestaltung der ersten Antriebseinrichtung als pneumatischer Antrieb dient zumindest ein Bereich des ersten Ventilglieds als Pneumatikkolben, der mit einem Bereich der Steuerbohrung einen größenvariablen Arbeitsraum begrenzt und in Abhängigkeit von einem Arbeitsdruck in diesem Arbeitsraum entgegen der Rückstellkraft der Druckfeder verschoben werden kann. Bei einer Ausgestaltung der ersten Antriebseinrichtung als Magnetantrieb kann vorgesehen sein, dass das erste Ventilglied als beweglicher Anker in einer zentralen Ausnehmung einer Magnetspule angeordnet ist und bei einer Strombeaufschlagung der Magnetspule entgegen der Rück Stellkraft der Druckfeder verschoben werden kann. In gleicher Weise kann die zweite Antriebseinrichtung wahlweise als pneumatischer Antrieb oder als Magnetantrieb ausgebildet sein. Bevorzugt ist vorgesehen, dass die erste Antriebseinrichtung und die zweite Antriebseinrichtung gleichartig ausgebildet sind und einander entgegengesetzte erste und zweite Stellkräfte bereitstellen können.

Vorteilhafte Ausführungsformen der Erfindung sind in der Zeichnung dargestellt. Hierbei zeigt:

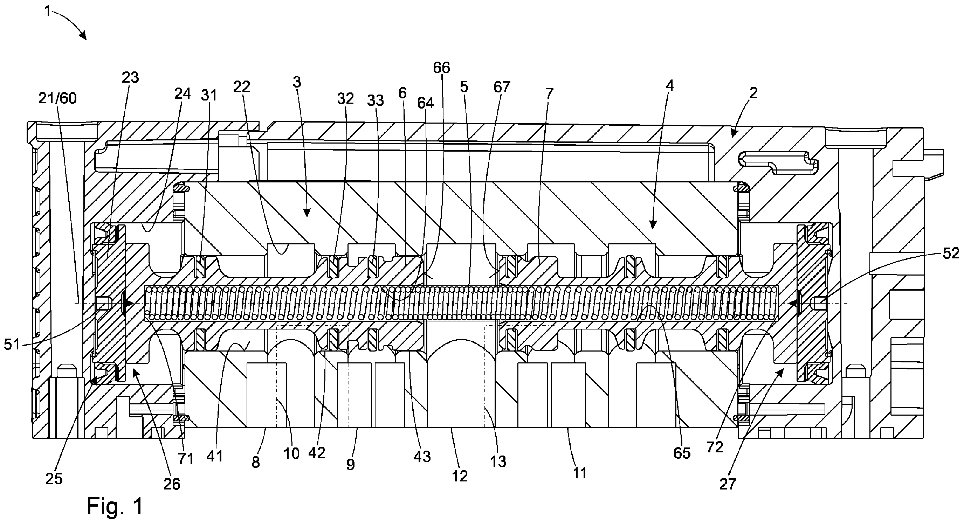

- Figur 1: eine schematische Schnittdarstellung einer ersten Ausführungsform eines Ventils zur Steuerung von Fluidströmen, bei dem ein erstes Ventilglied und ein zweites Ventilglied zusammen mit der Steuerbohrung eine Schieberventilanordnung bilden und pneumatisch vorgesteuert sind, wobei eine Druckfeder für eine Rückstellung der beiden Ventilglieder vorgesehen ist,

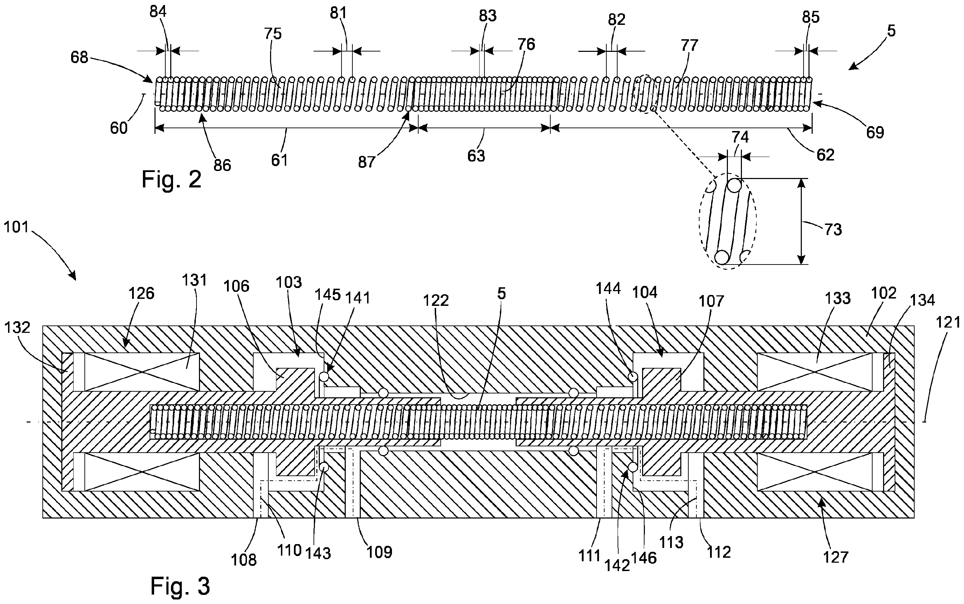

- Figur 2: eine schematische Schnittdarstellung der Druckfeder gemäß der Figur 1 in einem ausgebauten Zustand, und
- Figur 3: eine schematische Schnittdarstellung einer zweiten Ausführungsform eines Ventils zur Steuerung von Fluidströmen, bei dem ein erstes Ventilglied und ein zweites Ventilglied zusammen mit der Steuerbohrung eine Sitz Ventilanordnung bilden und magnetisch angetrieben sind, wobei eine Druckfeder für eine Rückstellung der beiden Ventilglieder vorgesehen ist.

Eine in der Figur 1 schematisch dargestellte erste Ausführungsform eines Ventils 1 umfasst ein Ventilgehäuse 2, das ein erstes Steuerventil 3 sowie ein zweites Steuerventil 4 beherbergt. Rein exemplarisch sind sowohl das erste Steuerventil 3 als auch das zweite Steuerventil 4 jeweils als pneumatisch vorgesteuerte 3/2-Wege-Schieberventile ausgebildet, die unabhängig voneinander betrieben werden können und die gemeinsam eine als Rückstellfeder dienende Druckfeder 5 nutzen. Gemäß der Darstellung der Figur 1 befinden sich ein erstes Ventilglied 6 des ersten Steuerventils 3 und ein zweites Ventilglied 7 des zweiten Steuerventils 4 in einer Neutralstellung. Rein exemplarisch sind die Neutralstellungen für das erste Ventilglied 6 und das zweite Ventilglied 7 derart gewählt, dass das erste Ventilglied 6 einen ersten Fluidkanal 10, der sich zwischen einem ersten Eingangsanschluss 8 und einem ersten Ausgangsanschluss 9 erstreckt, blockiert und dass das zweite Ventilglied 7 einen zweiten Fluidkanal 13, der sich zwischen einem zweiten Eingangsanschluss 11 und einem zweiten Ausgangsanschluss 12 erstreckt, blockiert.

Die nachstehende Beschreibung der Aufbauweise und der Funktion des ersten Steuerventils 3, das als, insbesondere normal offenes (NO), 3/2-Wegeventil ausgebildet ist, trifft im Wesentlichen auch auf das zweite Steuerventil 4 zu, das als, insbesondere normal geschlossenes (NC), 3/2-Wegeventil ausgebildet ist, zumal die erfindungswesentliche Funktion der Druckfeder 5 unabhängig von der jeweiligen Ausgestaltung des Steuerventils 3, 4 ist, so dass auf eine Beschreibung der Aufbauweise und der Funktion des zweiten Steuerventils 4 verzichtet wird.

Die Funktionsweise des als pneumatisch vorgesteuertes 3/2-Wege-Schieberventil ausgebildeten ersten Steuerventils 3 beruht darauf, dass das erste Ventilglied 6 linearbeweglich längs einer Bohrungsachse 21 in einer Steuerbohrung 22 des Ventilgehäuses aufgenommen ist und endseitig mit einem Kolbenabschnitt 23 versehen ist, der mit einem als Kolbenbohrung 24 ausgebildeten Bohrungsabschnitt der Steuerbohrung 22 einen größenvariablen Arbeitsraum 25 begrenzt und damit eine erste Antriebseinrichtung 26 bildet. In gleicher Weise wird durch die Komponenten des zweiten Steuerventils 4 eine zweite Antriebseinrichtung 27 gebildet.

Der Arbeitsraum 25 kann über eine in der Figur 1 nicht sichtbare Arbeitsbohrung belüftet und entlüftet werden. Bei einer Belüftung des Arbeitsraums 25, also einer Druckluftzufuhr in den Arbeitsraum 25, wird eine ansteigende Druckkraft als Stellkraft mit einer in Richtung des zweiten Ventilglieds 7 ausgerichteten ersten Kraftrichtung 51 auf den Kolbenabschnitt 23 ausgeübt, der einer Rückstellkraft der Druckfeder 5 entgegenwirkt. Hierbei ist vorgesehen, dass die Rückstellkraft der Druckfeder 5 in der Neutralstellung des ersten Ventilglieds 6 derart bemessen ist, dass eine Bewegung des ersten Ventilglieds 6 in Richtung des zweiten Ventilglieds 7 erst dann stattfindet, wenn ein vorgebebenes Druckniveau im Arbeitsraum 25 erreicht ist. Die Druckkraft auf den Arbeitskolben 25 führt zu einer elastischen Kompression, also einer Verkürzung, der Druckfeder 5, und damit einhergehend zu einer Bewegung des ersten Ventilglieds 6 in Richtung des zweiten Ventilglieds 7. Aufgrund der Verkleinerung der Länge der Druckfeder 5 und der damit verbundenen elastischen Deformation der Druckfeder 5 steigt die von der Druckfeder 5 bereitgestellte Rückstellkraft an.

Bei der Bewegung des ersten Ventilglieds 6 in Richtung des zweiten Ventilglieds 7 erfolgt eine Gleitbewegung einer ersten Radialdichtung 31 an einer ersten, rein exemplarisch kreiszylindrisch ausgebildeten ersten Innenoberfläche 41 der Steuerbohrung 22, wobei die erste Innenoberfläche 41 derart längs der Bohrungsachse 21 erstreckt ist, dass unabhängig von der Stellung des ersten Ventilglieds 6 stets eine Dichtwirkung zwischen der ersten Radialdichtung 31 und der ersten Innenoberfläche 41 gegeben ist.

Bei einer Belüftung eines vom zweiten Ventilglied 7 mit der Steuerbohrung 22 gebildeten, nicht bezeichneten Arbeitsraums wirkt eine Stellkraft mit einer in Richtung des ersten Ventilglieds 6 ausgerichteten zweiten Kraftrichtung 52 auf das zweite Ventilglied 7.

Eine beabstandet zur ersten Radialdichtung 31 angeordnete zweite Radialdichtung 32 befindet sich in der Neutralstellung des ersten Ventilglieds in abdichtendem Kontakt mit einer zweiten Innenoberfläche 42 der Steuerbohrung 22, wodurch eine fluidisch kommunizierende Verbindung für den ersten Fluidkanal 10, der sich zwischen dem ersten Eingangsanschluss 8 und dem ersten Ausgangsanschluss 9 und abschnittsweise im Bereich der zweiten Innenoberfläche 42 durch die Steuerbohrung 22 erstreckt, blockiert und damit unterbrochen ist. Bei einer Annäherung des ersten Ventilglieds 6 in die nicht dargestellte Funktionsstellung wird die abdichtende Wirkung zwischen der zweiten Radialdichtung 32 und der zweiten Innenoberfläche 42 aufgehoben, wodurch eine Freigabe der fluidisch kommunizierenden Verbindung zwischen dem ersten Eingangsanschluss 8 und dem ersten Ausgangsanschluss 9 erfolgt. Damit kann Fluid rein exemplarisch vom ersten Eingangsanschluss 8 zum ersten Ausgangsanschluss 9 strömen und dabei auch die Steuerbohrung 22 im Bereich der zweiten Innenoberfläche 42 passieren. Um hierbei ein unerwünschtes Übertreten des durch den ersten Fluidkanal 10 strömendes Fluids in Richtung des zweiten Ventilglieds 7 zu vermeiden, wird im Zuge der Verlagerung des ersten Ventilglieds 6 aus der Neutralstellung in die Funktionsstellung eine abdichtende Wirkung zwischen einer dritten Radialdichtung 33 und einer dritten Innenoberfläche 43 der Steuerbohrung hergestellt.

Sofern ausgehend von der in der Figur 1 nicht dargestellten Funktionsstellung für das erste Ventilglied 6 eine Entlüftung des Arbeitsraums 25 vorgenommen wird, sinkt die auf den Kolbenabschnitt 23 wirkende Druckkraft ab und aufgrund der in der Druckfeder gespeicherten Federenergie erfolgt eine Rückstellung des ersten Ventilglieds 6 in die Neutralstellung gemäß der Figur 1.

Die Druckfeder 5 ist in der Neutralstellung der beiden Ventilglieder 6 und 7 mit einer geringen Vorspannung zwischen den beiden Ventilgliedern 6 und 7 aufgenommen, die derart bemessen ist, dass bei einem bestimmungsgemäßen Gebrauch des Ventils 1 eine unerwünschte Bewegung der beiden Ventilglieder 6 und 7 ohne eine Druckbeaufschlagung des jeweils zugeordneten Arbeitsraums 25 vermieden wird, auch wenn beispielsweise eine Einleitung von Schwingungen von außen auf das Ventil 1 vorliegt.

Die Druckfeder 5 ist derart zwischen dem ersten Ventilglied 6 und dem zweiten Ventilglied 7 angeordnet, dass eine Windungsachse 60 der Druckfeder 5 parallel zur Bohrungsachse 21 der Steuerbohrung 22 ausgerichtet ist. Die Druckfeder 5 weist einen ersten Federabschnitt 61, einen zweiten Federabschnitt 62 und einen zentralen Federabschnitt 63 auf. Dabei ist aus der Figur 1 zu erkennen, dass der erste Federabschnitt 61 vollständig in einem ersten Sackloch 64 aufgenommen ist, das in dem ersten Ventilglied 6 ausgehend von einer dem zweiten Ventilglied 7 zugewandten ersten Stirnfläche 66 längs der Bohrungsachse 21 als kreiszylindrische Bohrung ausgebildet ist. In gleicher Weise ist der zweite Federabschnitt 62 vollständig in einem zweiten Sackloch 65 aufgenommen ist, das in dem zweiten Ventilglied 7 ausgehend von einer dem ersten Ventilglied 6 zugewandten zweiten Stirnfläche 67 längs der Bohrungsachse 21 als kreiszylindrische Bohrung ausgebildet ist.

Der erste Federabschnitt 61 liegt mit einem dem zweiten Ventilglied 7 abgewandten ersten Endbereich 68 an einer rein exemplarisch kreisrund ausgebildeten ersten Grundfläche 71 des ersten Sacklochs 64 an. Der zweite Federabschnitt 62 liegt mit einem dem ersten Ventilglied 6 abgewandten zweiten Endbereich 69 an einer rein exemplarisch kreisrund ausgebildeten zweiten Grundfläche 72 des zweiten Sacklochs 65 an.

Rein exemplarisch weist die Druckfeder 5 über ihre gesamte Erstreckung einen einheitlichen Windungsdurchmesser 73 und einen einheitlichen Drahtdurchmesser 74 auf. Ferner weist die Druckfeder 5 über ihre gesamte Erstreckung einen kreisrunden Drahtquerschnitt auf. Bei nicht dargestellten Ausführungsformen von Druckfedern kann vorgesehen sein, dass der Windungsdurchmesser und/oder der Drahtdurchmesser und/oder der Drahtquerschnitt über die Erstreckung der Druckfeder variiert.

Der erste Federabschnitt 61 weist abseits des ersten Endbereichs 68 eine erste Windungsteilung 81 auf, die rein exemplarisch nicht mehr als einem 2-fachen des Drahtdurchmessers 74 entspricht. Dadurch kann bei einer Kompression der Druckfeder 5 durch elastische Deformation der Windungen 75 des ersten Federabschnitts 61 eine Längenänderung der Druckfeder 5 in Form einer Verkürzung der Druckfeder 5 bewirkt werden.

Der erste Endbereich 68 ist mit einer Windungsteilung 84 ausgeführt, die dem Drahtdurchmesser 74 entspricht, so dass der erste Endbereich 68 bei einer Kompression der Druckfeder 5 keine Längenänderung erfährt, da die benachbart angeordneten Windungen bereits in der Neutralstellung der beiden Ventilglieder 6 und 7 in unmittelbarer Anlage zueinander angeordnet sind.

Der zwischen dem ersten Federabschnitt 61 und dem zweiten Federabschnitt 62 angeordnete zentrale Federabschnitt 63 weist eine zentrale Windungsteilung 83 auf, die dem Drahtdurchmesser 74 entspricht, so dass der zentrale Federabschnitt 63 bei einer Kompression der Druckfeder 5 keine Längenänderung erfährt, da die benachbart angeordneten Windungen bereits in der Neutralstellung der beiden Ventilglieder 6 und 7 in unmittelbarer Anlage zueinander angeordnet sind. Hierdurch wird sichergestellt, dass die Windungen 77 des zentralen Federabschnitts 63, die im Gegensatz zu den Windungen 75 des ersten Federabschnitts 61 und den Windungen 76 des zweiten Federabschnitts 62 nicht durch das jeweilige Ventilglied 6, 7 geführt sind, keine Ausknickbewegung in einer Richtung quer zur Windungsachse 60 vornehmen, was zu einer Fehlfunktion des Ventils 1 führen würde.

Rein exemplarisch ist in einem ersten Übergangsbereich 86 ein stetiger Übergang zwischen der Windungsteilung 83 des ersten Endbereichs und der ersten Windungsteilung 81 vorgesehen. Auch in einem zweiten Übergangsbereich 87 zwischen dem ersten Federabschnitt 61 und dem zentralen Federabschnitt 63 ist ein stetiger Übergang zwischen der ersten Windungsteilung 81 und der zentralen Windungsteilung 83 vorgesehen, wobei eine Erstreckung des ersten Übergangsbereichs 86 längs der Windungsachse 60 rein exemplarisch größer eine Erstreckung des zweiten Übergangsbereichs 87 längs der Windungsachse 60 ist.

Bei der in der Figur 3 gezeigten zweiten Ausführungsform eines Ventils 101 wird die gleiche Druckfeder 5 wie bei der ersten Ausführungsform des Ventils 1 gemäß der Figur 1 verwendet. Das Ventil 101 unterscheidet sich vom Ventil 1 dadurch, dass das erste Ventilglied 106 des ersten Steuerventils 103 eine erste Magnetspule 131 durchsetzt und endseitig mit einer rein exemplarisch kreiszylindrisch ausgebildeten ersten Ankerplatte 132 versehen ist. Ferner durchsetzt das zweite Ventilglied 107 des zweiten Steuerventils 104 eine zweite Magnetspule 133 und ist endseitig mit einer rein exemplarisch kreiszylindrisch ausgebildeten zweiten Ankerplatte 132 versehen.

In der Steuerbohrung 122 ist als Bestandteil des ersten Steuerventils 103 ein konzentrisch zur Bohrungsachse 121 ausgebildeter, als kreisringförmige Stirnfläche und mit einem ersten Dichtungsring 143 ausgerüsteter erster Ventilsitz 141 ausgebildet, der für eine flächige und damit abdichtende Anlage einer ersten Dichtfläche 145 des ersten Ventilglieds 106 ausgebildet ist, wenn dieses aus der dargestellten Neutralstellung in eine nicht dargestellte Funktionsstellung überführt wird. In der Funktionsstellung wird die fluidisch kommunizierende Verbindung für den ersten Fluidkanal, der sich zwischen dem ersten Eingangsanschluss 108 und dem ersten Ausgangsanschluss 109 erstreckt, blockiert.

Die Druckfeder 5 ist derart auf die als erste Antriebseinrichtung 126 dienende Baugruppe aus der ersten Magnetspule 131 und dem ersten Ventilglied 106 mit der zugehörigen Ankerplatte 132 angepasst, dass bei einer Bereitstellung eines Spulenstroms an die erste Magnetspule 131, der einen vorgegebenen Stromstärkenbetrag überschreiten muss, eine axiale Anziehungskraft von der ersten Magnetspule 131 auf die erste Ankerplatte 132 ausgeübt wird, so dass eine Kompression der Druckfeder 5 und eine Verlagerung des ersten Ventilglieds 106 aus der gezeigten Neutralstellung in eine nicht gezeigte Funktionsstellung hervorgerufen werden kann. Hierdurch gelangt die erste Dichtfläche 145 des ersten Ventilglieds 106 in abdichtende Anlage mit dem ersten Ventilsitz 141 und blockiert den ersten Fluidkanal 110.

In gleicher Weise ist das zweite Steuerventil 104 ausgebildet, so dass auf eine Beschreibung der Komponenten und der Funktion für das zweite Steuerventil 104 verzichtet wird.

## Patentansprüche

1. Ventil (1; 101) zur Steuerung von Fluidströmen, mit einem Ventilgehäuse (2; 102), in dem eine Steuerbohrung (22; 122) ausgebildet ist, die längs einer Bohrungsachse (21; 121) erstreckt ist und in der ein längs der Bohrungsachse (21; 121) zwischen einer ersten Öffnungsstellung und einer ersten Schließstellung für einen ersten Fluidkanal (10; 110) bewegliches erstes Ventilglied (6; 106) und ein längs der Bohrungsachse (21; 121) zwischen einer zweiten Öffnungsstellung und einer zweiten Schließstellung für einen zweiten Fluidkanal (13; 113) bewegliches zweites Ventilglied (7; 107) aufgenommen sind, mit einer ersten Antriebseinrichtung (26; 126), die dem ersten Ventilglied (6; 106) zur Bereitstellung einer ersten Stellkraft längs einer ersten Kraftrichtung (51) zugeordnet ist und mit einer zweiten Antriebseinrichtung (27; 127), die dem zweiten Ventilglied (7; 107) zur Bereitstellung einer zweiten Stellkraft längs einer zweiten Kraftrichtung (52) zugeordnet ist, sowie mit einer längs der Bohrungsachse (21; 121) vom ersten Ventilglied (6; 106) zum zweiten Ventilglied (7; 107) erstreckten Druckfeder (5), die als Wendelfeder ausgebildet ist, **dadurch gekennzeichnet, dass** die Druckfeder (5) einen zentralen Federabschnitt (63) aufweist, der zwischen dem ersten Ventilglied (6; 106) und dem zweiten Ventilglied (7; 107) angeordnet ist und der eine zentrale Windungsteilung (83) aufweist, die zumindest nahezu identisch, insbesondere identisch, mit einem Drahtdurchmesser (74) der Druckfeder (5), insbesondere mit einem Drahtdurchmesser (74) der Druckfeder (5) im zentralen Federabschnitt (63), ist.

2. Ventil (1; 101) nach Anspruch 1, **dadurch gekennzeichnet, dass** die Druckfeder (5) einen dem ersten Ventilglied (6; 106) zugeordneten ersten Federabschnitt (61) aufweist, der zumindest bereichsweise mit einer ersten Windungsteilung (81) ausgebildet ist, und dass die Druckfeder (5) einen dem zweiten Ventilglied (7; 107) zugeordneten zweiten Federabschnitt (62) aufweist, der zumindest bereichsweise mit einer zweiten Windungsteilung (82) ausgebildet ist, wobei die erste Windungsteilung (81) und die zweite Windungsteilung (82) größer als die zentrale Windungsteilung (83) sind.

3. Ventil (1; 101) nach Anspruch 2, **dadurch gekennzeichnet, dass** das erste Ventilglied (6; 106) ausgehend von einer dem zweiten Ventilglied (7; 107) zugewandten ersten Stirnfläche (66) mit einem längs der Bohrungsachse (21; 121) erstreckten ersten Sackloch (64) versehen ist, das zur Aufnahme des ersten Federabschnitts (61) ausgebildet ist und dass das zweite Ventilglied (7; 107) ausgehend von einer dem ersten Ventilglied (6; 106) zugewandten zweiten Stirnfläche (67) mit einem längs der Bohrungsachse (21; 121) erstreckten zweiten Sackloch (65) versehen ist, das zur Aufnahme des zweiten Federabschnitts (62) ausgebildet ist.

4. Ventil (1; 101) nach Anspruch 3, **dadurch gekennzeichnet, dass** der zentrale Federabschnitt (63) bis in das erste Sackloch (64) und bis in das zweite Sackloch (65) erstreckt ist.

5. Ventil (1; 101) nach einem der Ansprüche 1 bis 4, **dadurch gekennzeichnet, dass** die zweite Kraftrichtung der ersten Kraftrichtung entgegengesetzt ist und in Richtung des ersten Ventilglieds (6; 106) weist.

6. Ventil (1; 101) nach einem der Ansprüche 1 bis 4, **dadurch gekennzeichnet, dass** eine Erstreckung der Druckfeder (5) längs der Bohrungsachse wenigstens ein 10-faches, vorzugsweise wenigstens ein 15-faches eines Außendurchmessers (73) der Druckfeder (5) beträgt.

7. Ventil (1; 101) nach Anspruch 1, **dadurch gekennzeichnet, dass** die Druckfeder (5) in einem eingebauten Zustand eine innere Vorspannung aufweist, die von einem Abstand zwischen dem ersten Ventilglied (6; 106) und dem zweiten Ventilglied (7; 107) abhängig ist und dass der zentrale Federabschnitt (63) der Druckfeder (5) in einem ausgebauten Zustand zumindest bereichsweise auf Block gewickelt ist.

8. Ventil (1; 101) nach Anspruch 1, **dadurch gekennzeichnet, dass** ein dem zweiten Ventilglied (67; 107) abgewandter Endbereich (68) des ersten Federabschnitts (61) eine mit zunehmendem Abstand vom zweiten Ventilglied (7; 107) abnehmende Windungsteilung aufweist.

9. Ventil (1; 101) nach einem der vorhergehenden Ansprüche, **dadurch gekennzeichnet, dass** der erste Fluidkanal (10; 110) zwischen einem ersten Eingangsanschluss (8; 108) am Ventilgehäuse (2; 102) und einem ersten Ausgangsanschluss (9; 109) am Ventilgehäuse (2; 102) erstreckt ist und bereichsweise von einem ersten Bohrungsabschnitt der Steuerbohrung (22; 122) gebildet wird, der als Ventilsitz oder als Schieberbohrung ausgebildet ist, wobei das erste Ventilglied (6; 106) als Sitzventilglied oder als Schieberventilglied für eine wahlweise Blockierung oder Freigabe eines Strömungsquerschnitts im ersten Bohrungsabschnitt ausgebildet ist.

10. Ventil (1; 101) nach Anspruch 7, **dadurch gekennzeichnet, dass** die erste Antriebseinrichtung (26) als pneumatischer Antrieb ausgebildet ist, bei der das erste Ventilglied (6) mit der Steuerbohrung (22) einen größenvariablen ersten Antriebsraum (25) begrenzt oder dass die erste Antriebseinrichtung (126) als Magnetantrieb ausgebildet ist, bei der das erste Ventilglied (106) als Anker beweglich in einer Magnetspule (131) aufgenommen ist.
